**Europäisches Patentamt**

**European Patent Office**

**Office européen des brevets**

(19)

(11) Veröffentlichungsnummer: **0 038 413**

**A1**

(12) # EUROPÄISCHE PATENTANMELDUNG

(21) Anmeldenummer: **81101510.6**

(22) Anmeldetag: **03.03.81**

(51) Int. Cl.³: **G 03 B 3/10**
**G 02 B 7/04**

(30) Priorität: **22.04.80 DE 3015398**

(43) Veröffentlichungstag der Anmeldung:
**28.10.81 Patentblatt 81/43**

(84) Benannte Vertragsstaaten:
**CH FR GB LI**

(71) Anmelder: **Rollei-Werke Franke & Heidecke GmbH + Co KG**
**Salzdahlumer Strasse 196**
**D-3300 Braunschweig(DE)**

(72) Erfinder: **Goh, Djing San**
**Rosenkamp 19**
**D-3300 Braunschweig(DE)**

(74) Vertreter: **Gramm, Werner, Dipl.-Ing. et al,**
**Patentanwälte Gramm + Lins Theodor-Heuss-Strasse 2**
**D-3300 Braunschweig(DE)**

(54) **Fokussiereinrichtung mit motorischem Antrieb.**

(57) Die Erfindung betrifft eine Fokussiereinrichtung mit motorischem Antrieb (26), bestehend aus einer Linsenhalterung (12), einer Einrichtung (18) zur Führung der Linsenhalterung (12) bei deren Bewegung in Richtung der optischen Achse und einer Einrichtung zur Erzeugung einer relativen Rotationsantriebsbewegung zwischen Linsenhalterung (12) und Führungseinrichtung (18).

Als neu wird angesehen, daß in der Führungseinrichtung (18) zumindest eine in sich geschlossene Nutenbahn (16) angeordnet ist, in die von der Linsenhalterung (12) vorstehende Stifte (14,14') eingreifen.

FIG. I.

# Patentanwälte GRAMM + LINS

Dipl.-Ing. Werner Gramm
Dipl.-Phys. Edgar Lins

D-3300 Braunschweig

ROLLEI-WERKE
Franke & Heidecke GmbH & Co.KG

Telefon:     (05 31) 8 00 79
Telex:       09 52 620

Anwaltsakte   240-8 EP-1
Datum         2. März 1981

"Fokussiereinrichtung mit motorischem Antrieb"

Die Erfindung betrifft eine Fokussiereinrichtung mit motorischem Antrieb, bestehend aus einer Linsenhalterung, einer Einrichtung zur Führung der Linsenhalterung bei deren Bewegung in
Richtung der optischen Achse und einer Einrichtung zur Erzeugung einer relativen Rotationsantriebsbewegung zwischen Linsenhalterung und Führungseinrichtung.

Eine derartige Ausführungsform läßt sich der DE-OS 28 55 733
entnehmen. Der motorische Antrieb besteht aus einem Motor, auf
dessen Motorwelle ein Ritzel sitzt, das mit der Außenverzahnung
der hülsenförmig ausgebildeten Linsenhalterung kämmt. Die relative Rotationsantriebsbewegung zwischen Linsenhalterung und Führungseinrichtung wird somit durch Drehantrieb der Linsenhalterung erzeugt, während die Führungseinrichtung drehfest ausgebildet ist.

Der Antriebsmotor ist umschaltbar. Dreht er in die eine Richtung,
wird die Linse in eine entsprechende Richtung verfahren; dreht
der Motor in die andere Richtung, so wird die Linse in die entgegengesetzte Richtung verfahren.

Derartige Einrichtungen arbeiten technisch im Prinzip zufriedenstellend. Sie sind jedoch nicht völlig unproblematisch in der
Handhabung. Der Kamerabenutzer muß nämlich stets überlegen, welche Bedienungselemente er betätigen muß, um die Linse nach vorn
oder aber nach hinten zu verfahren.

Der Erfindung liegt die Aufgabe zugrunde, die eingangs erläuterte Fokussiereinrichtung so zu verbessern, daß die Bedienung erleichtert wird und auf umschaltbare Antriebsmotoren verzichtet
werden kann.

Diese Aufgabe wird gemäß der Erfindung dadurch gelöst, daß in
der Führungseinrichtung zumindest eine in sich geschlossene Nutenbahn angeordnet ist, in die von der Linsenhalterung vorstehende
Stifte eingreifen.

Da die Nutenbahn in sich geschlossen ist, wird bei der Rotation
der Linsenhalterung oder der Führungseinrichtung die Linsenhalterung zwischen zwei Extremlagen verfahren und zwar auch dann,
wenn die Rotationsantriebsbewegung immer in gleicher Richtung
verläuft. Die Erfindung führt somit zu dem großen Vorteil, daß
die Fokussiereinrichtung mit einem nur in einer Richtung drehenden und antreibenden Motor auskommt.

Ein weiterer Vorteil liegt in der Erleichterung der Bedienung
für den Kamerabenutzer. Dieser braucht sich jetzt nicht mehr
darum zu kümmern, ob die Linse zu weit vorn oder zu weit hinten
liegt. Er muß lediglich noch auf einen einzigen Schalter drücken,
woraufhin die Linse in Bewegung versetzt und ständig hin und
zurück gefahren wird. Der Benutzer sieht somit - wenn die erfindungsgemäße Einrichtung in einer Spiegelreflexkamera eingebaut
ist - das Bild ständig schärfer und dann wieder unschärfer werdend. Er kann z.B. die Linse einmal oder zweimal ihren gesamten

- 3 -

Verschiebebereich durchlaufen lassen um zu sehen, wie scharf das
Bild optimal wird und dann, wenn das Bild wieder scharf geworden
ist, den Schalter einfach loslassen.

Die erfindungsgemäße Fokussiereinrichtung eignet sich zum Verfahren einzelner Linsen ebenso wie zum Verfahren des gesamten
Objektivs.

Die Führungseinrichtung kann auch mehrere, parallel zueinander
verlaufende Nutenbahnen aufweisen.

Die Führungseinrichtung kann als Hohlzylinder und in einer abgewandelten Ausführungsform aus zumindest drei mit jeweils gleichem Winkelabstand voneinander auf einem Kreis angeordneten Spindeln bestehen.

Da es auf die Erzeugung einer relativen Rotationsantriebsbewegung
zwischen Linsenhalterung und Führungseinrichtung ankommt, kann
entweder die Führungseinheit, oder aber die Linsenhalterung drehfest ausgebildet sein.

Die Linsenhalterung kann als Ring ausgebildet sein, der einen
Zahnkranz für seine Rotationsantriebsbewegung aufweist, wobei
dieser Zahnkranz abgeschrägt und mit mindestens einem antreibenden Tellerrad kämmen kann. Zur Erzielung eines gleichmäßigen Antriebs können mehrere Tellerräder vorgesehen werden.

Die Linsenhalterung kann auch als Hohlzylinder ausgebildet sein,
der an seinem Außenumfang eine zahnkranzähnliche Riffelung aufweist, die mit einem Antriebszahnrad kämmt. Dabei ist es besonders zweckmäßig, wenn dieses Antriebszahnrad unmittelbar auf dem
motorischen Antrieb sitzt, da so auf ein Übertragungsgestänge
verzichtet werden kann. Der Antrieb selbst erfolgt an einer frei

- 4 -

- 4 -

zugänglichen Stelle, nämlich vor oder hinter der Führungseinrichtung. Die Längsriffelung muß so ausgebildet sein, daß auch beim Antrieb der Linsenhalterung die Längsriffeln bzw. in Längsrichtung verlaufenden Zähne zwischen den Zähnen des antreibenden Zahnrades in Längsrichtung hindurchgleiten können. Auch bei dieser Ausführungsform können mehrere Antriebszahnräder vorgesehen werden.

Ist die Linsenhalterung drehfest ausgebildet, kann es zweckmäßig sein, wenn sie an zumindest einer parallel zur optischen Achse angeordneten Stange verschiebbar geführt ist. Bei dieser Lösung kann der die Führungseinrichtung bildende Hohlzylinder auf seiner äußeren Mantelfläche einen Zahnkranz aufweisen, der mit einem Antriebsritzel kämmt. Auch hier ergibt sich der große Vorteil, daß der Antrieb besonders einfach und ohne zusätzliches Gestänge ausgebildet sein kann, und daß der Antrieb unmittelbar an der frei zugänglichen Außenseite der Führungseinrichtung angeordnet werden kann.

Besteht die Führungseinrichtung aus mehreren Spindeln, dann reicht bei sehr kleinen Verschiebebewegungen jeweils eine in sich geschlossene Nutenbahn pro Spindel aus; es ergibt sich dann eine kreuzungsfreie Nutenbahn. Die Linsenhalterung ist bei dieser Lösung in jedem Fall gegen Drehung gesichert, während sich die einzelnen Führungsspindeln synchron drehen. Da wegen des geringen Umfangs der Führungsspindeln die Nutenbahnen meist einander kreuzend ausgebildet sein müssen, erfordert diese Konstruktion genaue Führungen.

Auch die im Hohlzylinder vorgesehenen Nutenbahnen können kreuzend ausgebildet sein, um besonders große Verschiebewege zu überbrücken.

- 5 -

- 5 -

Die geometrische Form der Nutenbahn kann entsprechend der gewünschten Verfahrweise der Linse ausgebildet sein. So können die Nutenbahnen derart ausgebildet sein, daß die Linse sich mit gleichmäßiger Geschwindigkeit zwischen ihren beiden Endlagen hin- und herbewegt. Es ist aber auch eine Ausbildung möglich, bei der die Linse in einem mittleren Bereich, der besonders häufig zum Fotografieren verwendet wird, langsamer als im übrigen Bereich bewegt wird.

Weitere Vorteile und Merkmale der Erfindung gehen aus den Unteransprüchen in Verbindung mit der Beschreibung und der Zeichnung hervor.

In der Zeichnung sind einige als Beispiele dienende Ausführungsformen der Erfindung dargestellt. Es zeigen:

    Figur 1  einen Längsschnitt durch eine Fokussiereinrichtung;

Fig. 2: einen längs der Mantellinie aufgeschnitten und abgerollten Führungszylinder mit einer in sich geschlossenen, in dieser Figur jedoch links
unten und rechts unten offenen
Führungsnut,

Fig. 3: einen Längsschnitt durch eine andere
Ausführungsform der Erfindung mit
rotatorisch antreibbarer Führungseinrichtung,

Fig. 4: einen Schnitt durch eine weitere
Ausführungsform der Erfindung und

Fig. 5: eine Darstellung einer rotatorisch
antreibbaren Führungsspindel.

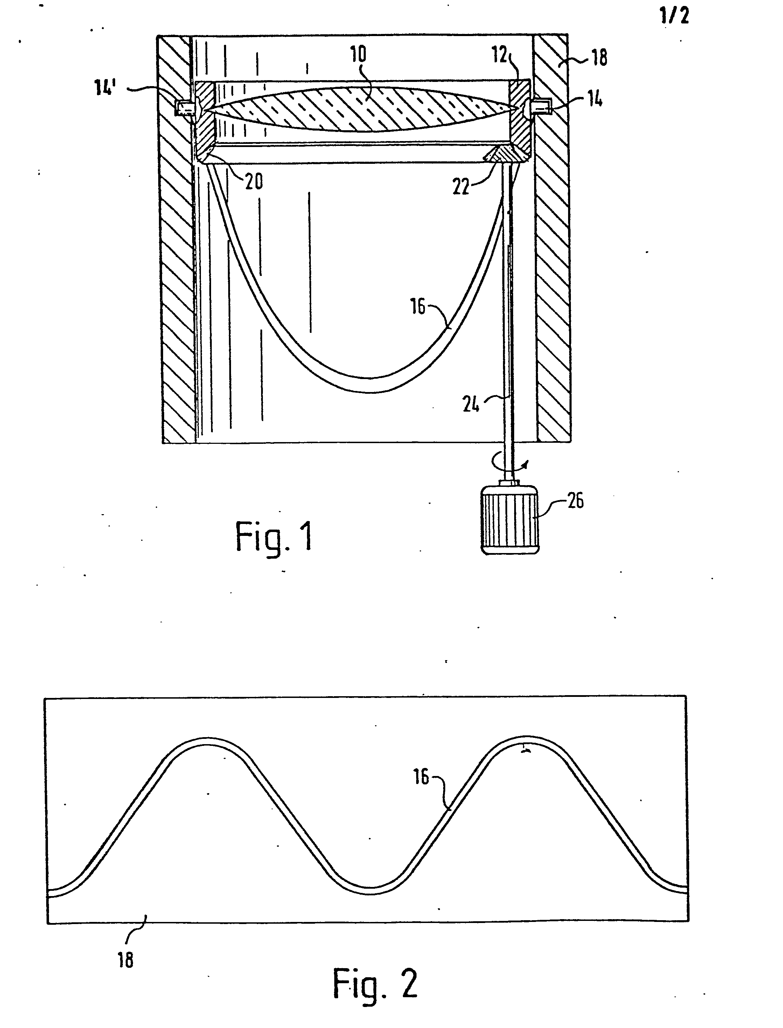

Die Figur 1 zeigt einen Längsschnitt durch eine
Ausführungsform der Erfindung.Eine Linse 10
ist in einem Haltering 12 gehaltert. Dieser
weist an zwei diametral gegenüberliegenden
Stellen nach außen vorstehende Stifte 14 und
14' auf, welche in eine in sich geschlossene
Nutenbahn 16 eingreifen, welche an der Innenwand eines in sich geschlossenen Führungszylinders 18 ausgebildet ist.

Der Linsenhaltering 12 weist an seiner Unterseite einen schrägen Zahnkranz 20 auf, dessen Zähne mit denen eines Tellerrades 22 kämmen. Das Tellerrad 22 wird über ein Gestänge 24 von einem Motor 26 angetrieben, welcher unterhalb des Führungszylinders 18 angeordnet ist, so daß er nicht den optischen Strahlengang behindert. Dieser Motor braucht lediglich in eine Richtung anzutreiben, wobei der Haltering 12 relativ zum Führungszylinder 18 gedreht und aufgrund des Eingriffs der Stifte 14 in der in sich geschlossenen Nutenbahn 16 zwischen seinen beiden Endpositionen hin- und hergefahren wird.

Die Figur 2 zeigt, in anderem Maßstab, einen Blick auf einen längs der Mantellinie aufgeschnittenen und abgerollten Führungszylinder 18. In dieser Figur 2 sieht man eine Führungsbahn 16, welche beim Zusammenrollen dieses Führungszylinders wiederum in sich geschlossen ist. Diese Nutenbahn 16 weist zwei Maxima und zwei Minima auf, sie dient somit zur Verschiebung eines Halteringes, welcher zwei nach außen vorstehende Stifte aufweist. Zur Führung eines Halteringes mit drei nach außen vorstehenden Stiften, die jeweils gleichen Winkelabstand von einander haben müssen, müßte eine in sich geschlossene Nutenbahn drei Maxima und drei Minima aufweisen und die Zahl der Maxima und der Minima der Nutenbahn entspricht stets der Anzahl der nach außen vorstehenden Stifte, sofern diese alle in dieselbe Nutenbahn eingreifen sollen.

Es können auch mehrere in sich geschlossene
Nutenbahnen in der Innenwand des Führungszylinders ausgebildet sein. Diese wären dann
in sich völlig gleichartig, jedoch um einen
Winkelbetrag gegeneinander verdreht. Die
entsprechenden Sätze von vorstehenden Stiften,
von denen diejenigen des einen Satzes in die
eine Nutenbahn und diejenigen des anderen
Satzes in die andere Nutenbahn eingreifen,
müßten dann um den gleichen Winkelbetrag
relativ zueinander versetzt angeordnet sein.
In sehr seltenen Fällen können auch geschlossene
Nutenbahnen ungleichartig parallel liegen, z.B.
bei Speziallinsen mit gewollten Entzerrungen für
Architekten oder für Trickaufnahmen.

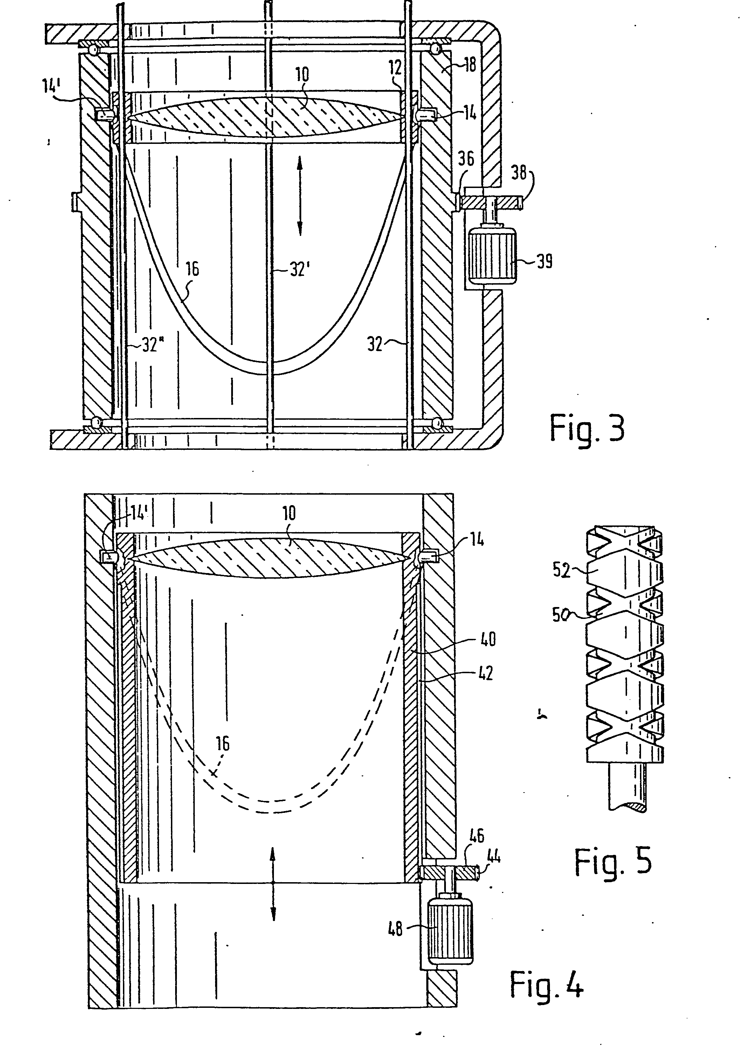

In der Figur 3 ist ein Schnitt durch eine
andere Ausführungsform der Erfindung dargestellt, wobei im übrigen die Teile, welche
mit denen der Figur 1 identisch sind, auch
gleiche Bezugszeichen tragen und nicht näher
beschrieben werden müssen.

Bei dieser Ausführungsform wird der Haltering 12 von Stangen 32, 32' und 32'' in
Richtung der optischen Achse verschiebbar,
jedoch gegen Verdrehungen gesichert, gehalten.
Angetrieben wird bei diesem Ausführungsbeispiel der Führungszylinder 18, und zwar über
einen an seinem Außenmantel ausgebildeten
Zahnkranz 36, mit Hilfe eines Antriebszahnrads 38 und eines Motors 39. Auch dieser Motor muß lediglich in eine Richtung antreiben.

Bei einer weiteren Ausführungsform der Erfindung wird die Linse 10 von einem Haltezylinder 40 gehalten. Auch dieser Zylinder weist an seinem äußeren Umfang wieder Stifte 14 und 14' auf, welche in eine in sich geschlossene Führungsnut 16 eingreifen, die an der Innenwand des Führungszylinders 18 ausgebildet ist.

Der Haltezylinder 40 weist an seinem Umfang Längsriffelungen 42 auf, welche mit den Zähnen 44 eines Zahnrads 46 kämmen, welches von einem Motor 48 angetrieben wird. Der Führungszylinder 18 ist drehfest mit der Kamera verbunden.

Bei Antrieb des Haltezylinders 40 wird dieser sowohl in Rotationsbewegung versetzt, als auch in Richtung der optischen Achse verschoben. Dabei gleiten die Rippen seiner Riffelung zwischen den Zähnen 44 des Zahnrads 46 nach unten bzw. nach oben. Auch diese Weiterbildung der Erfindung weist den Vorteil auf, daß kein Gestänge zur Übertragung der Antriebskraft erforderlich ist, sondern daß diese direkt mit Hilfe eines einzigen Zahnrades übertragen wird.

In Figur 5 sieht man eine Spindel, welche eine in sich geschlossene Nutenbahn 50 aufweist. Eine Anordnung von drei oder vier derartiger Spindeln mit jeweils gleichem Winkelabstand von einander auf einem Kreis kann als Führungseinrichtung für einen Linsenhaltering dienen, der entsprechend viele nach außen vorstehende Stifte 14, 14' aufweist. Bei dieser Ausführungsform wird der Haltering 12 drehfest gehalten, während die Spindeln 52 angetrieben werden. Dabei wird aufgrund des Eingriffs der vorstehenden Stifte 14 in die Nutenbahnen 50 die Linse 10 nach vorne bzw. nach hinten verfahren. Bei dieser Ausführungsform der Erfindung ist eine besonders gute Führung erforderlich, damit die vorstehenden Stifte 14, 14' an den Ecken der Kreuzungen der in sich geschlossenen Nutenbahnen 50 nicht hängen bleiben.

Weiterbildungen und andere Modifikationen der beschriebenen Ausführungsformen fallen in den Schutzumfang der Erfindung.

**0038413**
Dipl.-Ing. Werner Gramm
Dipl.-Phys. Edgar Lins

D-3300 Braunschweig

ROLLEI-WERKE
Franke & Heidecke GmbH & Co.KG

.Telefon:     (05 31) 8 00 79
Telex:        09 52 620

Anwaltsakte   240-8 ER-1
Datum         2. März 1981

Patentansprüche:

1. Fokussiereinrichtung mit motorischem Antrieb, bestehend aus einer Linsenhalterung, einer Einrichtung zur Führung der Linsenhalterung bei deren Bewegung in Richtung der optischen Achse und einer Einrichtung zur Erzeugung einer relativen Rotationsantriebsbewegung zwischen Linsenhalterung und Führungseinrichtung, d a d u r c h   g e k e n n z e i c h - n e t, daß in der Führungseinrichtung (18; 50) zumindest eine in sich geschlossene Nutenbahn (16;52) angeordnet ist, in die von der·Linsenhalterung (12;40) vorstehende Stifte (14,14') eingreifen.

2. Einrichtung nach Anspruch 1, gekennzeichnet durch mehrere, parallel zueinander verlaufende Nutenbahnen (16;52).

3. Einrichtung nach Anspruch 1 oder 2, dadurch gekennzeichnet, daß die Führungseinrichtung als Hohlzylinder (18) ausgebildet ist.

4. Einrichtung nach Anspruch 1 oder 2, dadurch gekennzeichnet, daß die Führungseinrichtung aus zumindest drei mit jeweils gleichem Winkelabstand voneinander auf einem Kreis angeordneten Spindeln (50) besteht.

- 2 -

5. Einrichtung nach Anspruch 1, 2 oder 3, dadurch gekennzeichnet, daß die Führungseinrichtung (18) drehfest ausgebildet ist.

6. Einrichtung nach einem der vorhergehenden Ansprüche, dadurch gekennzeichnet, daß die Linsenhalterung als Ring (12) ausgebildet ist.

7. Einrichtung nach Anspruch 6, dadurch gekennzeichnet, daß der die Linsenhalterung bildende Ring (12) einen Zahnkranz (20) für seine Rotationsantriebsbewegung aufweist.

8. Einrichtung nach Anspruch 7, dadurch gekennzeichnet, daß der Zahnkranz (20) abgeschrägt ist und mit mindestens einem antreibenden Tellerrad (22) kämmt.

9. Einrichtung nach Anspruch 8, dadurch gekennzeichnet, daß das Tellerrad (22) über ein Gestänge (24) mit dem motorischen Antrieb (26) verbunden ist.

10. Einrichtung nach Anspruch 1, 2 oder 3, dadurch gekennzeichnet, daß die Linsenhalterung als Hohlzylinder (40) ausgebildet ist, der an seinem Außenumfang eine zahnkranzähnliche Riffelung (42) aufweist, die mit einem Antriebszahnrad (46) kämmt.

11. Einrichtung nach Anspruch 10, dadurch gekennzeichnet, daß das Antriebszahnrad (46) unmittelbar auf dem motorischen Antrieb (48) sitzt.

12. Einrichtung nach einem der Ansprüche 1 bis 4, dadurch gekennzeichnet, daß die Linsenhalterung (12) drehfest ausgebildet ist.

13. Einrichtung nach Anspruch 12, dadurch gekennzeichnet, daß die Linsenhalterung (12) an zumindest einer parallel zur optischen Achse angeordneten Stange (32,32',32'') verschiebbar geführt ist.

14. Einrichtung nach Anspruch 3 und 12 oder 13, dadurch gekennzeichnet, daß der die Führungseinrichtung bildende Hohlzylinder (18) auf seiner äußeren Mantelfläche einen Zahnkranz (36) aufweist, der mit einem Antriebsritzel (38) kämmt.

Patentanwälte
G r a m m   +   L i n s
Gr/Gru.

Fig. 1

Fig. 2

Fig. 3

Fig. 4

Fig. 5

0038413

Nummer der Anmeldung

## EUROPÄISCHER RECHERCHENBERICHT

**Europäisches Patentamt**

EP 81 10 1510.6

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 1 954 391 (K. VOCKENHUBER et al.) <br> * Fig. 1 * | 1 |
| | DE - U - 1 855 324 (ZEISS IKON) <br> * Fig. 2 * | 1 |
| | FR - A - 959 124 (R. LAURENT) <br> * Fig. 2 * | 1 |
| | DE - A - 2 234 728 (SANKYO KOGAKU KOGYO) <br> * Fig. 3 * | 1 |
| | DE - B - 2 259 723 (J. SCHNEIDER & CO.) <br> * Fig. 1 * | 1 |
| D | DE - A1 - 2 855 733 (CANON) | |

**KLASSIFIKATION DER ANMELDUNG (Int. Cl.³)**

G 03 B 3/10
G 02 B 7/04

**RECHERCHIERTE SACHGEBIETE (Int. Cl.³)**

G 02 B 7/00
G 03 B 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 30-07-1981 | HOPPE. |

EPA form 1503.1  08.78